# EUROPEAN PATENT APPLICATION

(11) **EP 1 029 803 A2**
(43) Date of publication of application: **23.08.2000**
(21) Application number: 00103555.9
(22) Date of filing: 18.02.2000
(51) Int. Cl.: B65D 81/05, B65D 85/68

(54) **Packaging materials**

(30) Priority: 20.02.1999 GB 9903837
(71) Applicant: CARRS PAPER LIMITED, Solihull West Midlands B90 4LJ (GB)
(72) Inventor: Higgins, Peter John, Leamington Spa, Warwickshire CV32 7BH (GB)
(74) Representative: Harrison, Gordon Donald

(57) **Abstract**

A cover 10 for a disc brake assembly comprises two spaced parallel side walls 12, 14, an outer wall 16, an open side 18 and respective aligned recesses 13, 15, which extend within each side wall from the open side 18. The arrangement is such that the cover 10 may be fitted to a disc brake assembly A with the calliper C thereof received within the recesses 13, 15 and the brake rotor R enclosed within the cover.

## Description

This invention relates to packaging materials, and more particularly such materials intended for the protection of components of motor vehicles in the period between the completion of manufacture and delivery to the user.

The brake rotor in a disc brake assembly is one such component that is liable to corrosion during the period in which the completed vehicle is stored, usually out-of-doors, prior to delivery, and during delivery especially where the vehicle requires to be driven or transported for perhaps hundreds of kilometers.

It will be understood that a disc brake assembly comprises a brake rotor, a brake pad and an operating mechanism (usually referred to as the "calliper") for the brake pad. The brake rotor is exposed to the elements over most of its area, only a relatively small sector being partially covered in the region of the brake pad and the calliper, and the exposed area is particularly vulnerable to corrosion during long-term storage. Such corrosion may cause excessive juddering when the brakes are used, but does not normally arise once the vehicle is in regular use because the surface of the rotor is constantly cleaned by the brake pad as the brakes are used.

Previously, where protection has been provided for such disc brake rotors in-situ on the vehicle in which the brake assembly is installed, this has been achieved by enclosing substantially the entire assembly of brake rotor and calliper in a fixed overcover, but this has a number of disadvantages. In particular, it can be relatively difficult to fit and secure such a fixed overcover due to the inflexibility thereof. Moreover, the vehicle cannot safely be driven with the overcover in place. Substituting a flexible bag or the like for such overcover would do little to overcome these disadvantages.

According to a first aspect of the invention we provide, as protective packaging for the brake rotor of a disc brake assembly, a pre-formed cover which includes two side members, each of which has an outer edge, and an inner edge of generally C-shape, the side members being joined together along their outer edges to form a cover of channel shape in transverse section throughout its length, such that said inner edges define a recess which is formed in the cover and which is open at one end and, in use, accepts the calliper of a disc brake assembly so that the cover extends wound the otherwise exposed portion of the periphery of the brake rotor of said brake disc assembly.

The cover in accordance with the invention can slide easily into place on the brake disc assembly because of the provision of the open ended recess, and can be allowed to remain in place even when the vehicle is driven to the point of delivery over an extended distance.

Preferably, the cover is of relatively rigid construction to facilitate fitting to the brake assembly. In particular, the side members may be formed from plastics material and may be somewhat flexible, but preferably generally substantially shape-holding, for example by being pre-formed to the required shape, to facilitate fitting to the brake assembly. Alternatively the side members may be formed from a generally rigid material, such as a moulded plastic material or a corrugated cardboard material.

The cover may be formed as a single element in which said side members are joined together integrally by an intermediate web which extends transversely between the outer edges of the side members. Alternatively, the cover may comprise two separate elements which are physically secured together at a joint formed at the outer edges thereof in any convenient manner, such as adhesively or by heat sealing in the case of plastics materials.

Preferably, one or both of the side members are provided with a coating of a corrosion inhibiting material, such as a material impregnated with a vapour corrosion inhibitor which releases a protective vapour, on a face thereof which is disposed internally of the cover. Where the cover is made from corrugated cardboard, the corrugated layer would be arranged innermost, and the vapour corrosion inhibitor may be impregnated into it.

Each side member would normally include two generally parallel limbs interconnected by a transverse portion, preferably of generally semi-circular shape, in order to be able to enclose most of the periphery of the brake rotor where it is exposed.

To enable the cover to be held securely in place on the brake assembly, a retaining strap may be provided to extend between free ends of the limbs of one of the side members. Such retaining strap may comprise, for example, a strip of elasticated material attached at its opposite ends to the ends of the respective limbs of the side member. Alternatively, depending on the material from which the side members are made, in some cases the retaining strap may be formed integrally with the side member. Instead of providing a retaining strap, other fixing means could be employed, such as pads of adhesive material.

While it is preferred that the cover is generally shape-holding to enable it to be slipped easily in place, it is envisaged that the side members could alternatively be formed from flexible sheet material and supplied and stored in a flat condition, although this would render assembly with the brake assembly somewhat less easy.

The invention further resides in a disc brake assembly enclosed by such a cover.

The invention will now be described by way of example with reference to the accompanying drawings wherein:
Figure 1 shows a perspective view of a first embodiment of disc brake cover which is formed from two side members joined together on a medial plane,
Figure 2 shows a similar view of a modification of the first embodiment,
Figure 3 shows a similar view of a second embodiment which is formed from two integrally connected side members,
Figure 4 shows a similar view of a third embodiment which is formed as a flexible envelope, and
Figure 5 shows a further modification of the embodiment of figure 1 as fitted to a disc brake assembly.

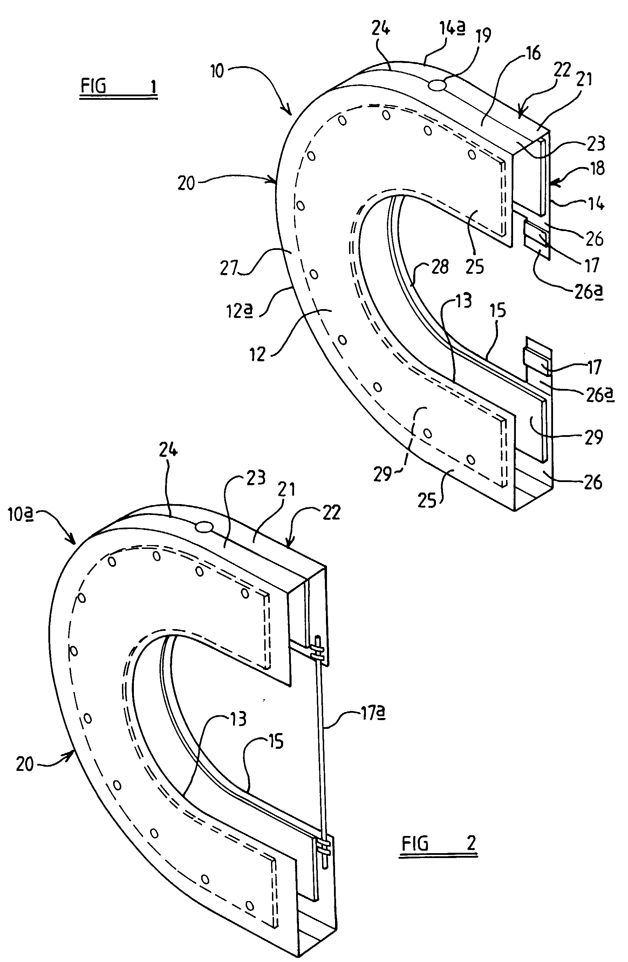

In the embodiments shown in Figures 1 to 4 the covers 10, 10a, 10b, 10c, each comprise two spaced parallel side walls 12, 14, an outer wall 16, an open side 18 and respective aligned recesses 13, 15, which extend within each side wall from the open side 18. The arrangement is such that, as shown in Figure 5, the cover may be fitted to a disc brake assembly A with the calliper C thereof received within the recesses 13, 15 and the brake rotor R enclosed within the cover. Drainage holes 19 (only one of which is illustrated) may be provided in the outer wall 16 to allow for the drainage of any water that may ingress while the cover is in place.

In the first embodiment, as shown in Figure 1, the cover 10 comprises two pre-formed side members 20, 22, each formed from a substantially shape-holding plastics material, or possibly from a material such as cardboard, particularly corrugated cardboard.

The side members 20, 22 in this embodiment each comprise the respective side wall 12, 14 and at their outer edges 12a, 14a a respective integrally formed lateral flange 21, 23. These flanges 21, 23 are joined together in any suitable manner along joint line 24 which is disposed on a medial plane relative to the cover as a whole to form the outer wall 16. However, it will be appreciated that in a modification, only one of the side members may have such a flange of correspondingly greater width to achieve the same spacing between the side walls 12, 14 with the joint then being formed at the edge of the other of said side walls.

As can be seen each side member 20, 22 is of generally C-shape with generally straight, parallel end portions 25, 26 interconnected by a respective intermediate curved portion 27, 28. However, although he intermediate portions 27, 28 as shown are of semi-circular shape, they could be of other shapes, and in particular the outer edges may be straight instead of semi-circular shape so that the cover as a whole is then generally of square shape apart from the recesses 13, 15.

On the inner face of each side wall 12, 14, there is secured an appropriately shaped piece of kraft paper 29 impregnated with a vapour corrosion inhibitor. In some instances, however, there may be only a single piece of such paper on one of the side wall, and in other cases the impregnated paper may be provided alternatively or additionally on the inner face of the outer wall 16.

In use, the cover 10 can simply be slipped in place over either the brake rotor or a combination of the rotor and a dust shield of disc brake assembly, with the calliper thereof located at the outer side of the side member 20. To secure the cover in position, in the embodiment of Figure 1, self adhesive tabs 17 are secured to inward extensions 26a formed at or adjacent to the free ends of the end portions 26 of the side member 22, such that the tabs 17 can be adhered to the brake calliper.

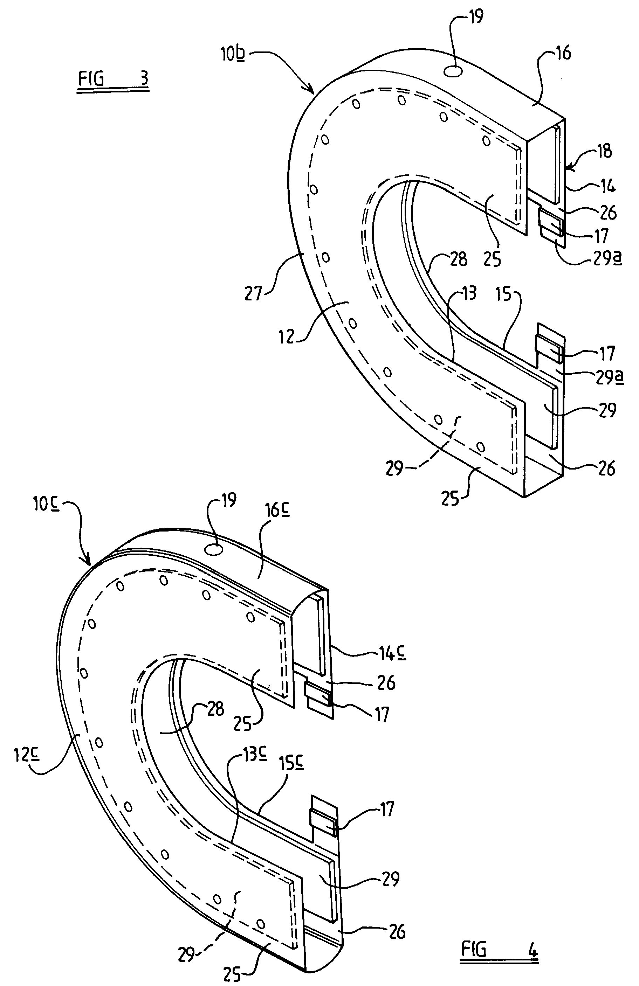

In the case of the modification shown in Figure 2, the cover 10a is substantially the same as that of Figure 1, but instead of the self-adhesive tabs 17, an elasticised strap 17a is secured to the side member 22 to extend between the straight end portions 26 thereof, such that the strap 17a can be stretched over the body of the brake calliper. In the further modification shown in Figure 5 in operative position on a brake disc assembly, a longer strap 17b is provided.

In some cases it may be possible to form such a strap integrally with the side member, where this is made of an appropriate material.

Whilst, in the embodiments illustrated in Figures 1 and 2 the covers are made from two side members 20, 22 secured together along the joint line 24, it is alternatively possible for a similar cover to be formed in one piece, for example as a moulding of a suitable light plastics material, formed possibly by blow moulding, and Figure 3 shows such an embodiment in which the side walls 12, 14 are integrally connected by the outer wall 16.

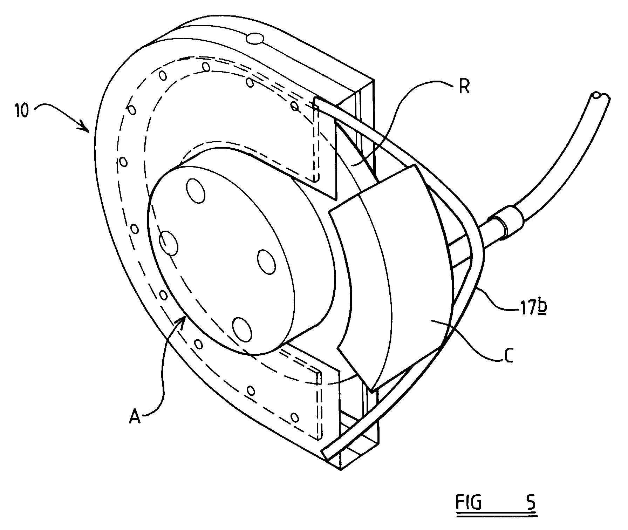

Whilst it is preferred for the cover to be made of a substantially shape-holding material, it is possible to form a similar cover from two layers of flat, flexible plastics material or the like, joined together at the outer edge to form a generally flat sleeve, which can be expanded laterally as it is applied to the disc brake rotor, and Figure 4 shows such an embodiment. In this case the side walls 12c, 14c are also integrally interconnected by the outer wall 16c, but the cover is made of a suitable flexible sheet material, and instead of there being self-adhesive tabs only at the open side as in the previously described embodiments, there may be similar tabs at spaced intervals along the edges of both recesses 13c, 15c or the recesses may be made narrower by inward extensions of the side walls with adhesive material around the edges of both recesses so that the side walls overlap the calliper and adhere thereto.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

**1.** A pre-formed cover (10, 10a, 10b, 10c) for use as protective packaging for the brake rotor of a disc brake assembly (A) comprises two side members (12, 14), each of which has an outer edge, and an inner edge of generally C-shape, the side members (12, 14) being joined together along their outer edges to form a cover of channel shape in transverse section throughout its length, such that said inner edges define a recess (13, 15) which is formed in the cover and which is open at one end and, in use, accepts the calliper (C) of a disc brake assembly (A) so that the cover extends around the otherwise exposed portion of the periphery of the brake rotor (R) of said brake disc assembly.

**2.** A cover according to Claim 1 wherein the cover (10. 10a, 10b) is of relatively rigid construction to facilitate fitting to the brake assembly.

**3.** A cover according to Claim 1 wherein said side members (12, 14) are formed from plastics material which is somewhat flexible, but generally substantially shape-holding.

**4.** A cover according to Claim 1 wherein said side members (12, 14) are formed from a generally rigid material.

**5.** A cover according to any one of the preceding Claims which is formed as a single element in which said side members (12, 14) are joined together integrally by an intermediate web (16; 16b; 16c) which extends transversely between the outer edges of said side members.

**6.** A cover according to any one of Claims 1 to 4 which comprises two separate elements (20, 22) which are physically secured together at a joint (24) formed at the outer edges thereof.

**7.** A cover according to any one of the preceding Claims wherein a coating of a corrosion inhibiting material (29) is provided on a face thereof which is disposed internally of the cover.

**8.** A cover according to Claim 7 wherein said coating is made form a material impregnated with a vapour corrosion inhibitor which releases a protective vapour.

**9.** A cover according to any one of the preceding Claims wherein each of said side members (12, 14) includes two generally parallel limbs (25, 26) interconnected by a transverse portion (27).

**10.** A cover according to Claim 9 wherein, to enable the cover to be held securely in place on the brake assembly, a retaining strap (17a, 17b) is provided to extend between free ends of the limbs of one of the side members.

**11.** A cover according to any Claim 10 wherein said retaining strap comprises a strip of elasticated material attached at its opposite ends to the ends of the respective limbs of the side member.

**12.** A cover according to any one of Claims 1 to 9 wherein pads (17) of adhesive material are provided to enable the cover to be held securely in place on the brake assembly.

**13.** A cover according to Claim 1 which is formed from flexible sheet material and supplied and stored in a flat condition.

**14.** A cover for use as protective packaging for the brake rotor (R) of a disc brake assembly (A) comprising two spaced parallel side walls (12, 14), an outer wall (16), an open side (18) and respective aligned recesses (13, 15) which extend within each side wall from the open side such that the cover may be fitted to a disc brake assembly with the calliper thereof received within said recesses and the brake rotor thereof enclosed within the cover.

**16.** A disc brake assembly enclosed by a cover as claimed in any one of the preceding Claims.
